# EUROPEAN PATENT APPLICATION

(11) **EP 0 943 368 A1**
(43) Date of publication of application: **22.09.1999**
(21) Application number: 98104675.8
(22) Date of filing: 16.03.1998
(51) Int. Cl.: B01F 1/00, B65D 88/66, B65G 65/44

(54) **A device for metering flowable products**

(71) Applicant: LAWER S.p.A., 13060 Lessona (Biella) (IT)
(72) Inventor: Lanaro, Walter, 13059 Trivero (Biella) (IT); De Bona, Paolo (IT), 13050 Soprana (Biella) (IT)
(74) Representative: Bosotti, Luciano

(57) **Abstract**

The material (M) to be supplied is made to pass through one or more chambers (18, 19) which are delimited by at least one wall (16) which can be activated selectively with a vibratory motion. The preferred application is for the metered supply of substances such as, for example, dyes for the textile industry.

## Description

The present invention relates to devices for the metered supply of fluid products, the term "fluid products" (or "flowing products") being intended to define herein products such as, for example, products in the form of powders, granules or micro spheres which can be transported by being made to run or flow. Products of this type are used widely, for example, in the chemical industry, in the food industry or (with reference to the field of use which will be referred to several times below but which is not intended to be limiting of the scope of the invention) in the textile industry, particularly in plants for the preparation of treatment baths such as, for example, dye baths.

For general information relating to this field, reference may be made to earlier patents IT-B-1 211 260, IT-B-1 218 689, IT-B-1 211 599, IT-B-1 244 617, EP-A-0 599 146 or IT-U-223 173, all in the name of the present Applicant.

A solution used widely in the art provides for the products in question to be stored in containers substantially comparable to tanks with outlets in their lower portions. The outlet is generally associated with a motor-driven member such as, for example, a screw, the operation of which brings about controlled discharge of the material in the container.

Various problems are encountered in the use of a solution of this type.

In the first place, the precision of the metered supply (which is important when the precise quantity of material supplied constitutes a determining factor for the final result to be achieved) is related to the dimensions of the screw; a large screw does not usually permit precise metering; conversely, the use of a small screw increases accuracy but cannot achieve the considerable flow rates which may be required, for example, for the supply of the main components of a mixture.

In the second place, most of the above-mentioned fluid products and particularly fine powders, especially when they are constituted by hygroscopic materials, tend to become, "compacted" in the storage container. During supply, it is therefore important to be able to eliminate any lumps formed as a result of the compaction effect. For this reason, the containers in question usually have agitators, for example, mechanical agitators comparable to crankshafts, above the supply outlet. In many cases, however, the action of these agitators has been found inadequate, particularly for materials of small dimensions.

The object of the present invention is to provide a device for supplying fluid products in which the aforesaid disadvantages are completely eliminated.

According to the present invention, this object is achieved by means of a device having the characteristics recited in the following claims.

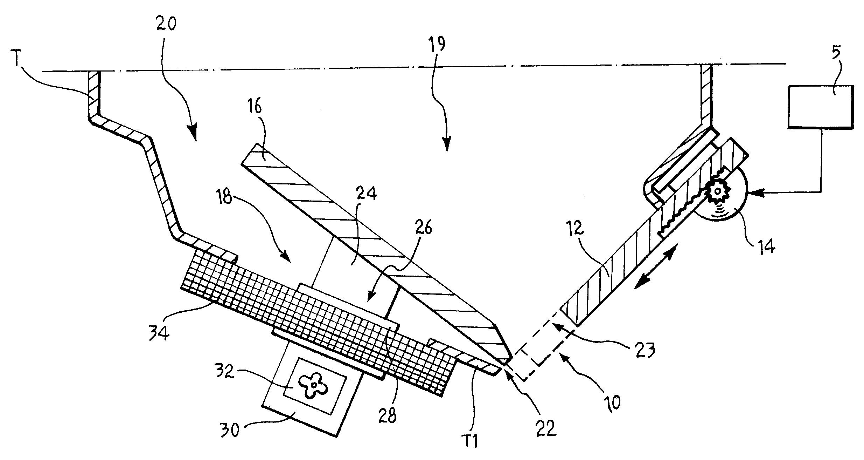

The invention will now be described, purely by way of non-limiting example, with reference to the appended drawing comprising a single figure constituting a schematic view showing, in section, the lower portion of a container or tank in which there is a certain quantity of a fluid product or material M; for the meaning attributed to the term "fluid" reference should be made to the definition given in the introduction to the present description.

By way of example, the container or tank T in question may be one of the tanks included in an automatic system for the preparation of dyes in a so-called "dye-house" of a textile plant. Systems of this type are widely known in the art as is proved, for example, by several of the patent documents cited in the introduction to the present description. This applies in particular to the usual presence of a plurality of tanks such as the tank T in the system.

It should, however, be pointed out once more that the specific embodiment described herein and its field of use should not be regarded as in any way limiting of the scope of the invention which is, in fact, general.

The tank T has a lower or base wall T1 preferably (but not necessarily) having a generally basin-like shape converging downwardly towards an outlet 10 located, in the embodiment shown, in a lateral position relative to the general shape of the tank T.

The tank T in question may be of any structure and shape. This applies in particular to its horizontal section which may, for example, be circular, flattened with opposite edges having profiles appropriate for the need to minimize compaction phenomena, etc.; this is all in accordance with criteria widely known in the art which do not need to be described herein and which, moreover, are not relevant for the purposes of an understanding of the invention. This also applies to the provision of mechanical agitators (not shown) on the body of the tank T and/or inside it and, in particular, on the lower wall T1, for imparting a certain motion to the fluid material M (for example, a dye in the form of powder, granules, etc.), at least at the moment of supply, in order to eliminate any lumps which have formed in the body of the material M during storage (in stock).

The discharge of the material M through the outlet 10 can be controlled by means of a sliding gate 12 associated with the outlet 10 (in known manner). In particular, the gate 12 may be movable relative to the outlet 10 between a position in which the outlet is fully closed and a position in which it is fully open. These end positions of the movement of the gate 12 are not shown in the drawing both because they are quite clear and because it was desired, in this graphical representation, to give priority to showing the possible positioning of the gate 12 in some intermediate positions, for reasons which will become clearer from the following.

The statement that the position of the gate 12 - may - be adjusted relative to the outlet 10 is intended to indicate that the embodiment described in greater detail below constitutes a preferred but not essential embodiment of the invention. In at least some applications, the gate 12 may in fact be formed in a manner such as to be movable simply between the position in which the outlet 10 is fully closed and the position in which it is fully open.

In the embodiment shown, which provides for possible adjustment to intermediate positions, the movement of the gate 12 is controlled by a motor 14 (of known type) controlled by a general control unit 15 (also of known type and constituted, for example, by a so-called programmable logic controller or PLC) which also supervises the general operation of the supply device according to the invention.

In the embodiment described by way of example herein, the device in question comprises, essentially, a plate-like element 16 disposed above the base wall T1 of the tank T so as to define, within the lower portion of the tank T, two chambers 18 and 19 which are arranged approximately one above the other and through which the product M flows towards the outlet 10.

The lower chamber, indicated 18, has a generally tapered or wedge-like shape converging towards to the outlet 10 with:
- an inlet or upstream opening 20 (in the direction of flow of the material M) which opens towards the interior of the tank T, and
- an outlet or downstream opening 22 constituted, in the embodiment illustrated, by a slot which extends in the region of the outlet 10 and in fact constitutes the lower portion thereof, delimited (at the top in the embodiment shown) by the plate-like element 16.

In the upper chamber 19 there can also be seen an inlet opening for the material M (in fact opening towards the interior of the tank T) and an outlet opening 23 in fact coinciding with the portion of the outlet 10 which is left free by the gate 12, above the element 16.

The downstream edge of the element 16 (which is usually slightly tapered or chamfered to facilitate the flow of the material M) extends in a manner such as not to interfere with the path of movement of the gate 12 whilst being able to cooperate with the gate 12 in close proximity thereto, in accordance with the criteria which will be described further below.

Clearly, moreover, although the embodiment shown is preferred it is not essential per se and many variations are possible, the principle of operation described below remaining unchanged.

This applies in particular, but not exclusively, to the following characteristics:
- the shape of the chambers, which do not necessarily have to be tapered or converging,
- the generally inclined orientation, for example, of the chamber 18, which may also be arranged horizontally or vertically (in fact beside the chamber 19),
- the lateral position of the outlet 10,
- the fact that the chamber 18 could be defined at the bottom by a wall distinct from the base wall T1 of the tank T, and
- the generally plate-like shape of the element 16; in fact the shape and arrangement of this element are clearly related both to the shape of the tank T and to the position of the outlet 10, as well as to other specific structural details of the unit in which the device is fitted.

With reference once more to the embodiment shown, the element 16 which separates the chambers 18 and 19 is supported inside the lower portion of the tank T by the distal end 24 of a bracket-like element 26, the proximal or base end 28 of which is connected to a vibrator device 30.

In the embodiment shown (which, it is again pointed out, is given by way of example) the vibrator member 30 comprises a vibration generator such as a small eccentric turbine 32 which, by virtue of the general assembly on a plate-like body 34 of elastomeric material, communicates its vibratory motion to the bracket-like element 26 (and hence to the plate-like element 16).

Vibration generators of this type are widely known in the art with many possible variants other than the turbine mentioned, and they can generally produce vibrations with frequencies of from a few Hz to tens or hundreds of Hz or more.

The generator 30, together with the members associated therewith, is preferably but not necessarily configured so as to impart to the element 16, which is substantially flat, a vibratory motion with a principal component in the plane in which the element 16 extends.

As a result, when the generator 30 is activated, the material M flowing by gravity inside the chambers 18 and 19 is disposed in respective supply chambers or ducts each having at least one wall (in fact, the element 16) which moves with a vibratory motion.

Tests carried out by the Applicant have shown that this vibratory motion brings about or at least facilitates two basic phenomena:
- the advance of the material M towards the outlet 10, and
- the breaking-up of any lumps resulting from compaction phenomena and still present in the material M; this effect is rendered even more marked when the chamber 18 has a generally converging or tapered shape as in the embodiment shown.

The supply of the material M thus achieved is in fact roughly comparable to that which can be achieved by placing a certain quantity of material between the palms of the hands and then moving the hands to and from slightly relative to one another so as to cause the material to fall from the distal ends of the fingers.

Clearly, the effect described above is generally achieved as a result of a vibratory motion of at least one of the walls of the chamber 18 (and of the chamber 19). This motion may be relative and may be achieved, as in the embodiment shown, by causing only one of the walls (constituted by the element 16 in the embodiment shown) to vibrate. The vibrating wall could, however be another wall; there could even be more than one vibrating wall.

As already stated, the distal edge of the vibrating element 16 is formed in a manner such that it can cooperate with the gate 12 associated with the outlet 10, in close proximity therewith.

Amongst other things, this enables the material M to be supplied through the outlet 10 at different flow rates.

For example, the gate 12 may be brought to an open position (not necessarily to the fully open position) by the operation of the motor 14 controlled by the unit 15, as shown by a solid line in the drawing. The gate 12 thus uncovers, above the vibrating element 16, a substantial portion of the outlet 10 through which the product M which flows into the chamber 19 can fall, for example, into an underlying container. For example, this may be a bucket mounted on a balance which checks the quantity of material metered in real time; systems of this type are known in the art as is clear from some of the documents cited in the introduction to the present description.

It is thus possible to supply a considerable quantity of material M in a short time; it will be noted that, in these conditions, the possible contribution of the supply through the slot defining the outlet end 22 of the chamber 18 is in fact negligible.

When the general control unit 15 of the system detects (for example, as a result of a feedback signal received from the above-mentioned balance), that the quantity of material already supplied is approaching the desired quantity, the device 10 can act on the drive element 14 so as to lower the gate 12 towards one of the two positions shown by a broken line and by a chain line in the drawing. In both of these positions, the lower end of the gate 12 cooperates with the distal edge of the element 16 and substantially or completely closes the wide opening through which the material M was previously supplied.

In particular, the position shown by the broken line represents one of the possible positions that the gate 12 may adopt under the control of the motor 14 and of the unit 15 in order to "choke" the net opening of the outlet 10 above the element 16 so as selectively to regulate the flow of material out of the chamber 19.

In the position shown in chain line, the gate 12 completely closes the portion of the outlet 10 which is above the element 16; the net opening of the outlet 10 is thus limited to the slot 22 between the distal end of the vibrating element 16 and the corresponding edge of the base wall of the tank T.

In this second position, the supply flow-rate is limited in conditions such that it is possible to perform fine metering (even of the order of one hundredth of a gramme or less) of the material M which flows through the chamber 18 simply by the activation of the vibrator device 30. In practice, when the member in question is de-activated, the supply of material M stops.

Clearly, if exclusively fine metering of material M is to be carried out, the gate 12 may be brought to the position shown in chain line in the drawing from the outset.

The solution shown is not limited by the particle size of the material M. In particular, if the tank T is to be used with the associated device according to the invention for the metered supply of fairly coarse materials, for example, granules, or spherules, the need for fine metering may be satisfied by the ability to control selectively the position adopted by the gate 12 above the vibrating element 16 (the position shown by the broken line in the drawing), that is, with the use of the chamber 19 as the supply duct for the material M. The presence of the chamber 18 and, in particular of its downstream opening 22, does not create difficulties of any kind in these conditions; in fact its dimensions, at least in the vicinity of the outlet 10, are substantially smaller than the homologous dimensions of the chamber 19 and of the respective downstream end 23. The chamber 18 is in fact filled and its outlet opening 22 easily becomes packed with the coarse material so that there is no interference with the metering action in the terms described above.

Again, the present description of an embodiment has referred to a device 16 associated, as a whole, with the lower portion of the tank T. Although this embodiment is preferable from various points of view, it is in no way essential. In particular, it would be possible (as in conventional supply systems) to use solutions in which there is a plurality of tanks T, each having a respective outlet 10 at its lower end. It is then possible to provide a single vibrator device (of the type described above) associated with a supply station (having, for example, a weighing balance) which can be aligned with the outlet of the tank T involved at the time in question in order to cooperate therewith to implement the supply methods described above. The variants necessary for this purpose are within the capabilities of an expert in the art and do not require detailed description herein.

Naturally, the principle of the invention remaining the same, the details of construction and forms of embodiment may be varied widely with respect to those described and illustrated, without thereby departing from the scope of the present invention.

## Claims

1. A device for the metered supply of fluid products, characterized in that it comprises at least one chamber (18, 19) defining a respective duct for the material (M) being supplied, the at least one chamber (18, 19) being delimited by at least one wall (16) which can be moved with a vibratory motion.

2. A device according to Claim 1, characterized in that the at least one chamber (18) has a generally tapered shape with dimensions decreasing in the direction of advance of the material (M).

3. A device according to Claim 1 or Claim 2, characterized in that the at least one chamber (18, 19) comprises a downstream end (22, 23) defining at least one respective outlet portion (10) for the supply of the material (M).

4. A device according to any one of the preceding claims, characterized in that the at least one wall is defined by a generally flat element (16) with associated vibration-generator means (30) which can impart to the element (16) a vibratory motion with a predominant component in the general plane in which the element (16) extends.

5. A device according to any one of the preceding claims, characterized in that the at least one wall (16) has an associated mechanical vibration generator (30).

6. A device according to Claim 5, characterized in that the vibration generator (30) is a turbine (32).

7. A device according to any one of the preceding claims, characterized in that the at least one wall (16) is mounted on a resilient support (34) in order to perform the vibratory motion.

8. A device according to any one of the preceding claims, characterized in that the vibratory motion has a frequency within the range extending from units of Hz to hundreds of Hz.

9. A device according to any one of the preceding claims, characterized in that it comprises a pair of chambers (18, 19) through which the material being supplied passes, the chambers having respective downstream ends (22, 23) as well as closure means (12) for selectively at least partially closing the downstream end (23) of at least one (19) of the chambers (18, 19).

10. A device according to Claim 9, characterized in that, of the pair of chambers (18, 19), the other chamber (18) has a respective downstream end (22) having substantially smaller dimensions than those of the downstream end (23) of the said one (19) of the chambers (18, 19).

11. A device according to Claim 10, characterized in that the closure means (12) is movable (14) selectively (15) between:
- at least one first position in which the closure means leaves the downstream end (23) of the said one (19) of the chambers (18, 19) substantially free, permitting a substantial flow of the material (M) being supplied,
- at least one second, selectively adjustable position, in which the closure means (12) substantially occupies the downstream end (23) of the said one (19) of the chambers (18, 19), metering the flow of the material (M) being supplied, and
- at least one third position in which the closure means (12) blocks the downstream end (23) of the said one of the chambers (18, 19).

12. A device according to any one of Claims 9 to 11, characterized in that at least one wall (16) capable of vibratory motion extends so as to separate the chambers (18, 19) of the pair.

13. A device according to Claim 9 or Claim 12, characterized in that the closure means (12) is constituted by a gate (12) movable selectively across the downstream end (23) of at least one of the chambers (18, 19).

14. A device according to Claims 11, 12 and 13, characterized in that the gate (12) cooperates with the at least one wall (16) in the at least one second and one third positions.

15. A device according to any one of the preceding claims, characterized in that the said at least one chamber (18) is generally inclined to the horizontal plane in the direction of flow of the material (M).

16. A device according to Claim 9, characterized in that the chambers of the pair (18, 19) are arranged at least partially one above the other with the said at least one chamber (19) in the upper position.

17. A device according to any one of the preceding claims, characterized in that the said at least one chamber (18) has a generally tapered shape converging in the direction of supply of the material (M).

18. A device according to any one of the preceding claims, characterized in that the at least one wall (16) is mounted on a resilient support (34).
